# EUROPEAN PATENT APPLICATION

(11) **EP 2 851 847 A1**
(43) Date of publication of application: **25.03.2015**
(21) Application number: 13306276.0
(22) Date of filing: 19.09.2013
(51) Int. Cl.: G06K 19/06, G06K 17/00, G06T 1/00

(54) **Method and apparatus for storing data**

(71) Applicant: Thomson Licensing, 92130 Issy-les-Moulineaux (FR)
(72) Inventor: Hütter, Ingo, 30982 Pattensen (DE)
(74) Representative: Schmidt-Uhlig, Thomas

(57) **Abstract**

A method and an apparatus (20) for storing data as a coded two-dimensional pattern (3) of pixels on a photographic medium (26) are described. An encoder (22) codes (10) the data to be stored as a two-dimensional pattern (1) of pixels. A pixel adaptor (24) generates (11) an adapted two-dimensional pattern (3) of pixels by adapting a coverage of individual pixels for at least a part of the two-dimensional pattern (1) of pixels such that the adapted two-dimensional pattern (3) of pixels resembles an image associated to the data. The resulting adapted two-dimensional pattern (3) is then transferred (12) onto the photographic medium (25) by a data recorder (24).

## Description

### FIELD OF THE INVENTION

The invention relates to a method and an apparatus for storing data, and more specifically to a method and an apparatus for storing data on a photographic medium in the form of a bit pattern.

### BACKGROUND OF THE INVENTION

It is commonly recognized that polyester based modern photochemical microfiches as well as films may carry information printed on their optical reactive emulsions for very long periods. Therefore, a commonly used solution for archiving analog sources, e.g. images, film, documents etc., is to print them directly onto a film or a microfiche. However, classical microfilm and microfiches can only hold pure black and white information. As a consequence the quality of archived grayscale and color sources is dramatically reduced compared to using cinematographic film, photographic film or color microfilm. Nevertheless, irrespective of the employed recording media it is not possible to later retrieve the full quality of the sources due to sharpness reduction, noise (grain), fading, aging etc.

As an alternative, the so-called Bits-on-Film technology has been developed, which allows to store data in digital form on photographic media. For example, the article C. Voges et al.: "Technology and Applications of Digital Data Storage on Microfilm", J. Imag. Sci. Tech., Vol. 53 (2009), pp. 060505-1 - 060505-8, describes the technology of digital data storage on microfilm. The Bits-on-Film technology consists in printing tiny black-and-white, grey, or colored pixels on a photographic medium, e.g. on a microfiche, microfilm or a cinematographic film. A pixel typically covers a square or, more general, rectangular area and may consist of several sub-pixels. For example, when a high-resolution film printer is used, a single square pixel on the film may be formed by 2×2 or 3×3 sub-pixels printed by the film printer, whereas a single rectangular pixel may be formed by 2×3 sub-pixels. Each pixel represents stored information. Typically, blocks of pixels are printed. The blocks consist of pixels that are arranged as an array of pixels, which in combination form a square or a rectangle. A block is thus printed as a checkered pattern. The stored data can be retrieved by scanning and subsequently analyzing the printed pattern.

Unfortunately, the printed pattern does not allow to easily determine what is actually stored in the pattern. Such a feature is, however, commonly demanded by archiving professionals, who would prefer to be able to obtain information about the stored data with the naked eye. For this purpose it has been proposed to archive an analog copy of an image together with a digitally encoded copy of the image on the same microfilm. See, for example, D. Fluck: "Ausbelichtung digitaler Daten auf Farbmikrofilm: Neue Möglichkeiten und Kostenperspektiven für die Langzeitarchivierung", presentation at the Recom Symposion Stuttgart 2007 ("Print of digital data to color microfilm: New opportunities and cost prospects for long-term archival on color microfilm"; available at http://www.recom-art.de). Though this approach allows to easily gain an idea about what is stored in the pattern of pixel, it comes at the cost of a reduced storage capacity of the microfilm.

### SUMMARY OF THE INVENTION

It is thus an object of the present invention to propose a solution for storing data as a pattern of pixels on a photographic medium, which allows to easily gain information about the stored data.

According to the invention, a method for storing data as a coded two-dimensional pattern of pixels on a photographic medium comprises the steps of:
- coding the data to be stored as a two-dimensional pattern of pixels;
- generating an adapted two-dimensional pattern of pixels by adapting a coverage of individual pixels for at least a part of the two-dimensional pattern of pixels such that the adapted two-dimensional pattern of pixels resembles an image associated to the data; and
- transferring the adapted two-dimensional pattern (3) onto the photographic medium.

Accordingly, an apparatus configured to store data as a coded two-dimensional pattern of pixels on a photographic medium comprises:
- an encoder configured to code the data to be stored as a two-dimensional pattern of pixels;
- a pixel adaptor configured to generate an adapted two-dimensional pattern of pixels by adapting a coverage of individual pixels for at least a part of the two-dimensional pattern of pixels such that the adapted two-dimensional pattern of pixels resembles an image associated to the data, and
- a data recorder configured to transfer the adapted two-dimensional pattern onto the photographic medium.

Similarly, a computer readable storage medium has stored therein instructions enabling storing data as a coded two-dimensional pattern of pixels on a photographic medium, which when executed by a computer, cause the computer to:
- code the data to be stored as a two-dimensional pattern of pixels;
- generate an adapted two-dimensional pattern of pixels by adapting a coverage of individual pixels for at least a part of the two-dimensional pattern of pixels such that the adapted two-dimensional pattern of pixels resembles an image associated to the data; and
- transfer the adapted two-dimensional pattern (3) onto the photographic medium.

When storing digital content on two dimensional surfaces, small black or white pixels with a given size are used, where each pixels represents one data bit. Although these pixels usually have the same coverage of 100%, i.e. the full area of a pixel has the same color, this isn't a necessary condition. If the quality of the reproduction process is sufficiently precise, the coverage can be varied a bit without any problems; the stored information will nevertheless be kept. By varying the coverage in accordance with the luminance of the an image associated to the data to intended for archival, it is possible to generate patterns that give an impression of the associated image. This approach is likewise applicable to grey value or color valued coded two-dimensional patterns. The associated image may be the actual image to be stored, a selected image of a sequence of images to be stored, an image describing the content of the data to be stored, a logo, etc.

The proposed solution allows storing digital data on common microfiches or films based on the bits on film technology. However, in contrast to known solutions the associated images are recognizable by the naked eye without any technical aids. The solution thus satisfies a need often formulated by professionals. In addition, the solution is not limited to archiving of data. It is also useful for adding a perceivable image to two-dimensional barcodes, e.g. QR codes or matrix codes used for document authentication or the like.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: shows a two-dimensional random pattern of black and white pixels,
- Fig. 2: shows an image to be stored as a pattern of black and white pixels,
- Fig. 3: depicts a stored pattern when only the sizes of the black pixels are varied,
- Fig. 4: shows a stored pattern when only the sizes of the white pixels are varied,
- Fig. 5: depicts a stored pattern with a higher resolution,
- Fig. 6: illustrates data stored as a pattern of black and white pixels, where only a part of the pattern allows to recognize an associated image
- Fig. 7: shows a first solution for reducing the coverage of a pixel;
- Fig. 8: depicts a second solution for reducing the coverage of a pixel;
- Fig. 9: shows a third solution for reducing the coverage of a pixel;
- Fig. 10: schematically shows a method according to the invention for storing data on a photographic medium, and
- Fig. 11: illustrates an apparatus adapted to implement a solution according to the invention for storing data.

### DETAILED DESCRIPTION OF PREFERED EMBODIMENTS

The Bits-on-Film technology consists in printing tiny black-and-white, grey, or colored square pixels on a photographic medium, e.g. on a film or a microfiche. Each pixel represents stored information. Typically, blocks of pixels are printed. The blocks consist of pixels that are arranged as a regular array of pixels, which in combination form a square or a rectangle. A block is thus printed as a checkered pattern. The stored data can be retrieved by scanning and subsequently analyzing the printed pattern.

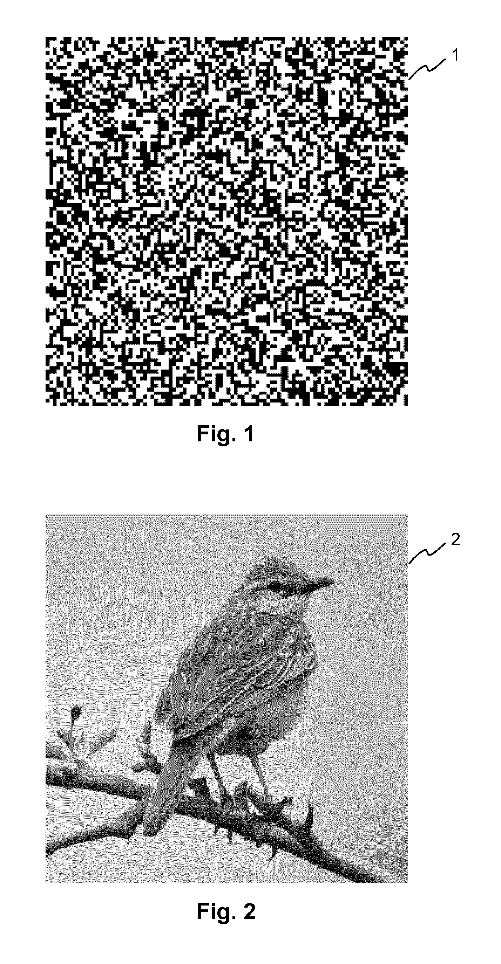

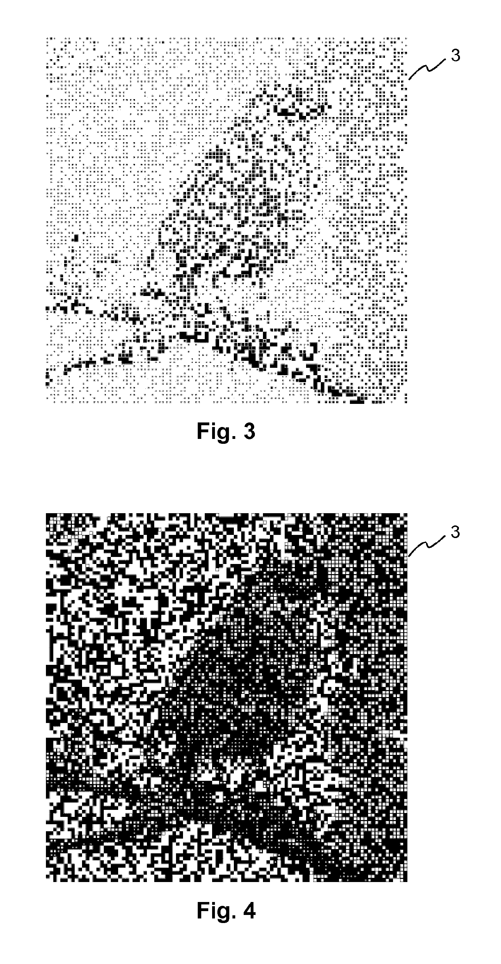

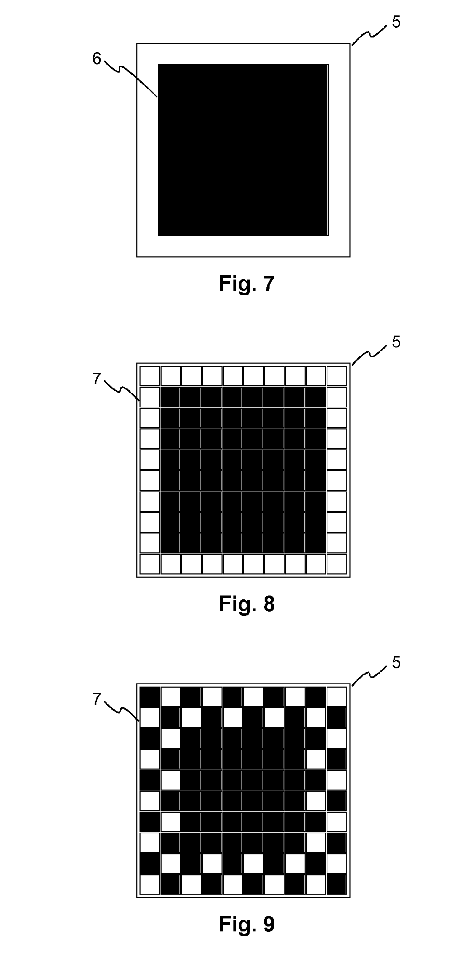

In the following a coding scheme using only black and white pixels is assumed. If the source content is perfectly entropy encoded, the two values black and white occur with a probability of 0.5 and there is no correlation between consecutive pixels. Fig. 1 shows an example of a two-dimensional random pattern 1 created as a representation of such content. The size of this pattern is 100×102 pixels. Let's now assume that the digital data stored in the pattern 1 of Fig. 1 are a representation of the image 2 depicted in Fig. 2. In order to ensure that the original image 2 is recognizable from the stored pattern 1, the coverages of the pixels in the pattern are varied in accordance with the luminance of the source image 2. Coverage of a pixel here means the area of the pixel that is actually covered by the color corresponding to the value of the pixel relative to the nominal area of the pixel. To give an example, in case of a black pixel with a coverage of 75%, 25% of the pixel area are actually white, whereas 75% of the pixel area are black. Further explanations will be given below with reference to Figs. 7 to 9. In principle, it is possible to adapt only the coverage of the black pixels, only the white pixels, or both. Fig. 3 shows the adapted pattern 3 after modifying the coverages of the black pixels only. In this simulation the employed coverages of the black squares were 100%, 77%, 55%, and 33% of the nominal pixel area. A modification of only the white pixels results in the pattern 3 shown in Fig. 4.

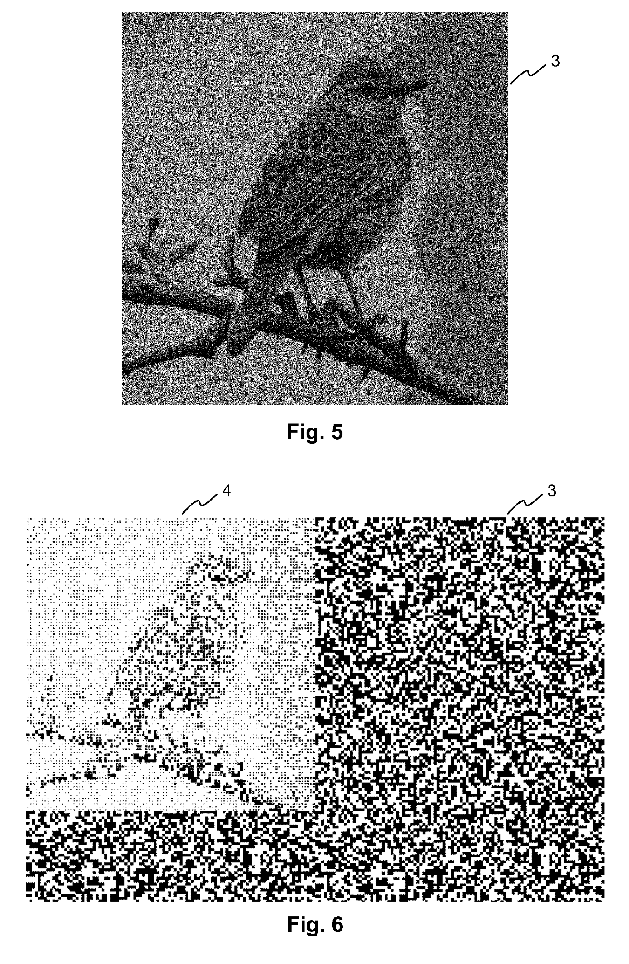

In the examples shown in Fig. 3 and Fig. 4 the quality of the recognizable image is still limited. This is because the number of pixels is very low compared to real archiving solutions. Nevertheless, the pattern 3 already gives a good impression of the source image 2. With a higher resolution of the pattern the quality of the modified pattern 3 also improves. This is well visible at the example of Fig. 5, where the size is 1000×1020 pixels. With this quality it is no problem to inspect the content of an archived digital pattern. Also in this simulation only four different pixel coverages were used. A larger number of pixel coverages will further increase the quality of the recognizable image.

In Figs. 3 to 5 the complete two-dimensional data pattern 3 is used to visualize the original image 2. This is, however, not necessarily the case. Fig. 6 illustrates data stored as a pattern of black and white pixels, where only a part 4 of the pattern 3 is used to visualize an associated image. This is especially useful if larger amounts of data are stored with a single or maybe a few associated images. For example, an image sequence may be stored as a two-dimensional data pattern. In such a case only the first image may be visualized, or the first image following each scene cut or the like.

A first solution for reducing the coverage of a pixel 5 is depicted in Fig. 7. In this example the size of the pixel 6 that is actually printed onto the film is reduced upon printing. As a result the printed pixel 6 covers only a fraction of the nominal area of the pixel 5.

A second solution for reducing the coverage of a pixel 5 is illustrated in Fig. 8. In this example the pixel 5 consists of 10×10 sub-pixels 7, i.e. 10×10 pixels of a film printer are used for printing a single pixel 5. In order to reduce the coverage of the pixel 5 only the 8×8 central sub-pixels are actually printed. The remaining sub-pixels are left white.

Yet a further solution is depicted in Fig. 9. Again the pixel 5 consists of 10×10 sub-pixels 7. In this case, however, only 6×6 central sub-pixels plus selected sub-pixels surrounding the central sub-pixels are printed.

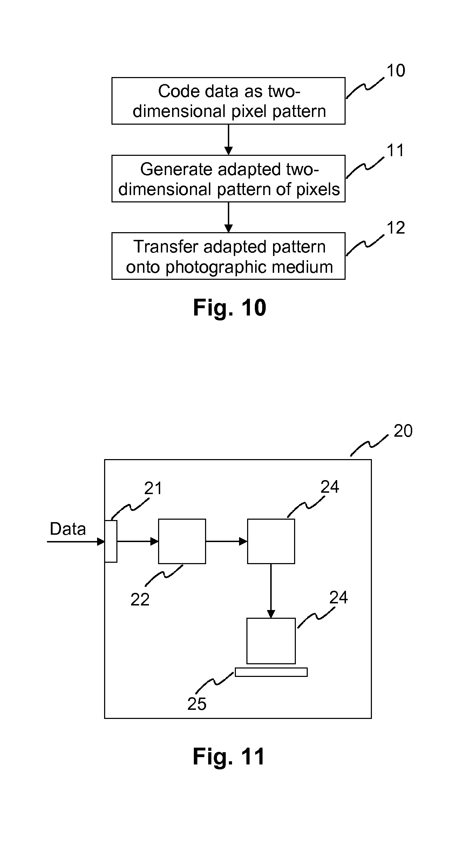

A method according to the invention for storing data on a photographic medium 25 is schematically shown in Fig. 10. In a first step the data to be stored are coded 10 as a two-dimensional pattern 1 of pixels. Then an adapted two-dimensional pattern 3 of pixels is generated 11 by adapting a coverage of individual pixels for at least a part of the two-dimensional pattern 1 of pixels such that the adapted two-dimensional pattern 3 of pixels resembles an image associated to the data. For example, in case of a pattern of black and white pixels the percentage of the area of a pixel that is black may be set to one of a variety of different values. Finally, the adapted two-dimensional pattern 3 is transferred 12 onto the photographic medium 25. For this purpose advantageously a writing technology is employed, where the actual size of the transferred pixels 6 can be modified. This is possible, for example, when the pixels are written with a laser beam. In this case the size of a pixel, and hence the coverage of the pixel, can be adjusted by modifying the focus of the beam.

Fig. 11 schematically illustrates an apparatus 20 adapted to implement a solution according to the invention for storing data on a photographic medium. The apparatus has an input 21 for receiving data to be stored. An encoder 22 codes 10 the data to be stored as a two-dimensional pattern 1 of pixels. A pixel manipulator 23 generates 11 an adapted two-dimensional pattern 3 of pixels by adapting a coverage of individual pixels for at least a part of the two-dimensional pattern 1 of pixels such that the adapted two-dimensional pattern 3 of pixels resembles an image associated to the data. Finally, a film printer or data recorder 24 transfers 12 the adapted two-dimensional pattern 3 of pixels onto the photographic medium 25. Of course, the various units of the apparatus 20 may likewise be combined or partially combined into a single unit or implemented as software running on a processor.

## Claims

1. A method for storing data as a coded two-dimensional pattern (3) of pixels on a photographic medium (26), the method **comprising** the steps of:
- coding (10) the data to be stored as a two-dimensional pattern (1) of pixels;
- generating (11) an adapted two-dimensional pattern (3) of pixels by adapting a coverage of individual pixels for at least a part of the two-dimensional pattern (1) of pixels such that the adapted two-dimensional pattern (3) of pixels resembles an image associated to the data; and
- transferring (12) the adapted two-dimensional pattern (3) onto the photographic medium (25).

2. The method according to claim 1, **wherein** the image associated to the data is at least one of an image to be stored, a selected image of a sequence of images to be stored, an image describing the content of the data to be stored, or a logo.

3. The method according to claims 1 or 2, **wherein** the coded two-dimensional pattern (1) of pixels is at least one of a pattern of black and white pixels, a pattern of pixels with different grey values, or a pattern of pixels with different color values.

4. The method according to one of the preceding claims, **wherein** the coverage of a pixel is adapted by changing the percentage of the area of a pixel that is colored in accordance with a specified color value.

5. The method according to claim 4, **wherein** the percentage of the area of a pixel that is colored in accordance with a specified color value is changed by changing the pixel size upon transferring (12) the pixel onto the photographic medium (26).

6. An apparatus (20) configured to store data as a coded two-dimensional pattern (3) of pixels on a photographic medium (26), the apparatus **comprising:**
- an encoder (22) configured to code (10) the data to be stored as a two-dimensional pattern (1) of pixels;
- a pixel adaptor (23) configured to generate (11) an adapted two-dimensional pattern (3) of pixels by adapting a coverage of individual pixels for at least a part of the two-dimensional pattern (1) of pixels such that the adapted two-dimensional pattern (3) of pixels resembles an image associated to the data, and
- a data recorder (24) configured to transfer (12) the adapted two-dimensional pattern (3) onto the photographic medium (25).

7. A computer readable storage medium having stored therein instructions enabling storing data as a coded two-dimensional pattern (3) of pixels on a photographic medium (26), which when executed by a computer, cause the computer to:
- code (10) the data to be stored as a two-dimensional pattern (1) of pixels;
- generate (11) an adapted two-dimensional pattern (3) of pixels by adapting a coverage of individual pixels for at least a part of the two-dimensional pattern (1) of pixels such that the adapted two-dimensional pattern (3) of pixels resembles an image associated to the data; and
- transfer (12) the adapted two-dimensional pattern (3) onto the photographic medium (25).
